# FASCICULE DE BREVET EUROPEEN

(11) **EP 1 626 456 B1**
(45) Date de publication et mention de la délivrance du brevet: **11.09.2013**
(21) Numéro de dépôt: 05291501.4
(22) Date de dépôt: 12.07.2005
(51) Int. Cl.: H01M 2/34, H01M 10/04, H01M 2/12, H01M 2/02

(54) **Dispositif de sécurité pour accumulateur étanche**
Sicherheitseinrichtung für einen gasdicht verschlossenen Akkumulator
Safety device for sealed storage battery

(30) Priorité: 23.07.2004 FR 0408182
(43) Date de publication de la demande: 15.02.2006
(73) Titulaire: SAFT, 93170 Bagnolet (FR)
(72) Inventeur: Rigobert, Gérard, 33370 Fargues St Hilaire (FR); Gilabert, Claude, Louens, 33290 Le Pian Medoc (FR); Jonac, Philippe, 33170 Gradignan (FR); Ligeois, Dominique, 86340 Nouaille Maupertuis (FR)
(74) Mandataire: Hirsch & Associés

(56) Documents cités:
- US-A- 5 677 076
- US-A- 5 741 606
- US-B1- 6 344 292

## Description

La présente invention se rapporte à un procédé d'utilisation d'un dispositif de sécurité pour accumulateur étanche.

Un accumulateur étanche ou générateur électrochimique étanche (ces deux termes étant équivalents, on utilisera le terme d'accumulateur dans la présente description) comprend de façon connue en soi un faisceau électrochimique comportant une alternance d'électrodes positives et négatives encadrant des séparateurs imprégnés d'électrolyte. Chaque électrode est composée d'un collecteur de courant métallique supportant sur au moins une de ses faces la matière électrochimiquement active. L'électrode est connectée électriquement à une sortie de courant qui assure la continuité électrique entre l'électrode et l'application extérieure à laquelle l'accumulateur est associé. Le faisceau d'électrodes est disposé dans un conteneur fermé de manière étanche par un couvercle.

L'invention concerne les accumulateurs étanches de type nickel-cadmium, nickel-métal hydrure et lithium-ion. Ces accumulateurs peuvent être de format cylindrique ou de format rectangulaire (connu également sous le terme de prismatique).

Un accumulateur est généralement conçu pour fonctionner dans des conditions dites nominales, c'est-à-dire dans des gammes de température, courant et tension données. L'utilisation d'un accumulateur étanche hors des conditions nominales, comme par exemple une surcharge accidentelle, un court-circuit, une température supérieure à la température maximale de fonctionnement, etc., crée un risque d'explosion. En effet, de telles situations entraînent un échauffement de l'électrolyte et la formation de vapeurs d'électrolyte. L'accumulation de ces vapeurs dans le conteneur entraîne une augmentation de la pression interne de l'accumulateur, qui peut conduire à un éclatement violent du conteneur et à la projection de composés chimiques nocifs et corrosifs pour l'environnement et les personnes situées à proximité.

Des dispositifs de sécurité existent, qui évitent l'accumulation des gaz à l'intérieur du conteneur d'un accumulateur étanche et permettent leur évacuation lorsque la pression interne excède une valeur prédéterminée.

Les dispositifs de sécurité connus sont généralement constitués de soupapes. Le document US-A-5 523 178 décrit une soupape pour accumulateur. Cette soupape présente cependant l'inconvénient d'être de conception complexe. Lorsque leur conception est simple, les soupapes ont le désavantage de ne s'ouvrir que pour des pressions élevées ou de ne s'ouvrir que pour une plage étroite de pressions.

Le document US 6 344 292 décrit un un procédé d'utilisation d'un dispositif de sécurité pour accumulateur étanche comprenant une alternance d'électrodes positives et négatives respectivement reliées à des bornes de sortie de courant, les électrodes étant disposées dans un conteneur présentant une extrémité obturée par une paroi présentant un amincissement adapté à être déchiré par une surpression à l'intérieur du conteneur, une déchirure de l'amincissement interrompant la conduction électrique entre les électrodes d'une polarité et sa borne de sortie de courant.

Par ailleurs, il est nécessaire qu'un dispositif de sécurité pour accumulateur possède également la fonction de coupe-circuit, apte à isoler électriquement et de façon irréversible, les appareils connectés à l'accumulateur. Les soupapes connues ne remplissent pas cette fonction de coupe-circuit. Un dispositif électrique spécifique doit être prévu pour assurer la fonction de coupe-circuit lorsque la soupape est activée.

Il existe donc un besoin d'un dispositif de sécurité pour accumulateur étanche, qui soit de conception simple, applicable à des pressions faibles et qui puisse fonctionner sur une large plage de pressions. Il existe également un besoin d'un dispositif de sécurité agissant simultanément comme coupe-circuit.

La présente invention a pour but de résoudre les problèmes mentionnés ci-dessus.

A cet effet, l'invention concerne un procédé d'utilisation d'un dispositif de sécurité pour accumulateur étanche selon la revendication 1 comprenant une alternance d'électrodes positives et négatives respectivement reliées à des bornes de sortie de courant, les électrodes étant disposées dans un conteneur présentant une extrémité obturée par une paroi présentant un amincissement adapté à être déchiré par une surpression à l'intérieur du conteneur, une déchirure de l'amincissement étant adaptée à interrompre la conduction électrique entre les électrodes d'une polarité et sa borne de sortie de courant.

Selon une caractéristique, l'amincissement constitue une zone de fragilisation de la paroi de l'extrémité obturée.

Selon une caractéristique, l'extrémité obturée par une paroi supporte les bornes de sortie de courant.

Selon une caractéristique, un couvercle placé sur une extrémité ouverte du conteneur supporte les bornes de sortie de courant.

Selon les modes de réalisation, la déchirure est adaptée à interrompre la conduction électrique entre les électrodes positives et la borne de sortie de courant positive ou entre les électrodes négatives et la borne de sortie de courant négative.

Selon les applications, l'accumulateur étanche est de format cylindrique ou prismatique.

Selon une caractéristique, l'accumulateur étanche fonctionne avec des pressions à l'intérieur du conteneur comprises entre 4 et 20 bar, de préférence 8 à 12 bar.

Selon une caractéristique, l'épaisseur de l'amincissement représente sensiblement 20 % de l'épaisseur de la paroi de l'extrémité obturée du conteneur.

Selon une caractéristique, un retour sur la paroi de l'extrémité obturée est adapté à empêcher l'éjection des électrodes en cas de déchirure de l'amincissement.

L'invention concerne aussi un procédé de fabrication d'un dispositif de sécurité pour accumulateur étanche comprenant les étapes consistant à :
- fournir un conteneur présentant une extrémité obturée par une paroi ;
- emboutir la paroi de l'extrémité obturée de façon à créer un amincissement adapté à être déchiré par une surpression à l'intérieur du conteneur ;
- disposer un faisceau d'électrodes positives et négatives dans le conteneur ;
- raccorder les électrodes à des bornes de sortie de courant de façon à ce qu'une déchirure de l'amincissement interrompe la conduction électrique entre les électrodes d'une polarité et sa borne de sortie de courant ;
- fermer l'accumulateur de façon étanche.

D'autres caractéristiques et avantages de l'invention apparaîtront à la lecture de la description qui suit, donnée à titre d'exemple et en référence aux figures qui montrent :
- Figure 1, une vue en coupe longitudinale d'un accumulateur cylindrique lithium-ion étanche, muni d'un dispositif de sécurité selon l'invention ;
- Figures 2A et 2B, respectivement une vue en coupe longitudinale et une vue en coupe transversale du dispositif de sécurité selon l'invention.

L'invention concerne un procédé d'utilisation d'un dispositif de sécurité pour accumulateur étanche selon la revendication 1. L'accumulateur comprend une alternance d'électrodes positives et négatives respectivement reliées à des bornes de sortie de courant. Les électrodes sont disposées dans un conteneur présentant une extrémité obturée par une paroi. La paroi de l'extrémité obturée présente un amincissement adapté à être déchiré par une surpression à l'intérieur du conteneur. Une déchirure de l'amincissement est adaptée à interrompre la conduction électrique entre les électrodes d'une polarité et sa borne de sortie de courant.

Ainsi dans l'hypothèse où la pression interne de l'accumulateur dépasserait une valeur seuil prédéterminée, la déchirure de l'amincissement permet l'évacuation des gaz et évite ainsi l'explosion de l'accumulateur. Ce dispositif agit également comme coupe-circuit en interrompant simultanément la conduction électrique entre les électrodes d'une polarité et sa borne de sortie de courant.

L'invention va être décrite dans un mode préféré de réalisation donné à titre d'exemple.

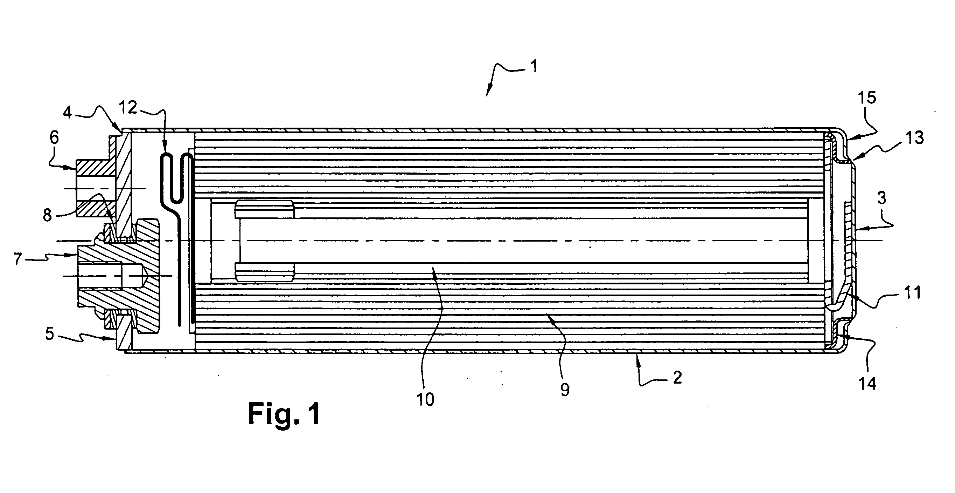

La figure 1 montre en coupe longitudinale un accumulateur lithium-ion cylindrique étanche muni du dispositif de sécurité selon l'invention.

L'accumulateur 1 comprend un conteneur présentant une paroi cylindrique 2 obturée par un fond 3 à une extrémité et ouverte à l'autre extrémité 4. Un couvercle 5 est placé sur l'extrémité ouverte. Il supporte les bornes de sortie de courant 6 et 7. Une des bornes de sortie de courant, dans l'exemple la borne positive 6, est soudée sur le couvercle. L'autre borne de sortie de courant, dans l'exemple la borne négative 7, passe à travers le couvercle. Elle est fixée sur celui-ci par tout moyen tel que vissage ou sertissage. Un joint 8 isole électriquement la borne de sortie de courant négative 7 du couvercle.

Un faisceau électrochimique 9, constitué par un enroulement d'électrodes positives, négatives et de séparateur, est disposé dans le conteneur autour d'un axe creux 10 qui sert de cheminée de gaz. Une connexion plane 11 raccorde l'électrode positive du faisceau à la paroi du fond du conteneur, les parois du conteneur étant électriquement conductrices avec le couvercle. Une autre connexion plane 12 raccorde l'électrode négative du faisceau à la borne de sortie de courant négative. Un joint en forme d'anneau 14 est placé entre le faisceau électrochimique et le fond du conteneur. Il sert d'isolant électrique afin d'empêcher un contact électrique entre la tranche d'une électrode négative du faisceau et la paroi du conteneur reliée à la borne positive, ce qui pourrait occasionner un court-circuit.

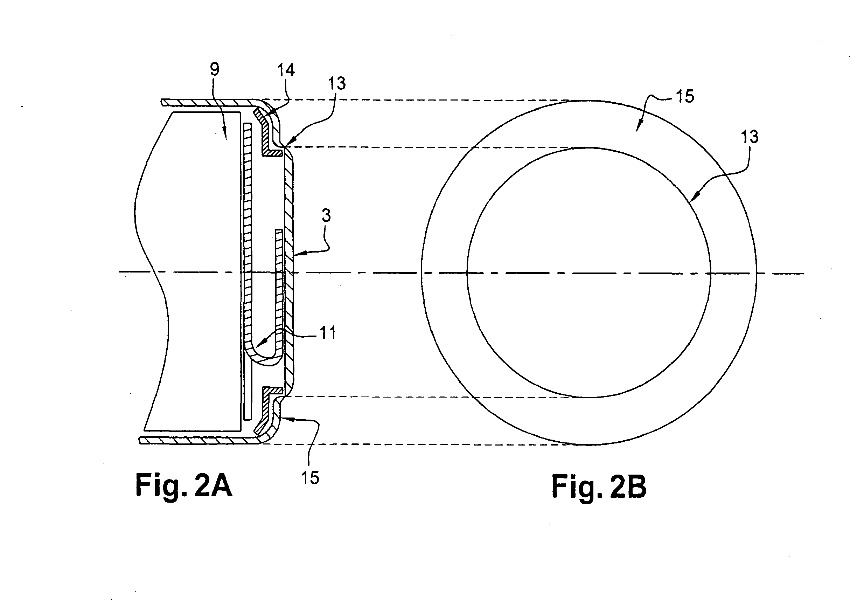

Selon l'invention, l'extrémité obturée 3 constituée par le fond du conteneur présente un amincissement 13. Cet amincissement est adapté à être déchiré par une surpression à l'intérieur du conteneur. Dans l'exemple illustré, une déchirure de l'amincissement étant adaptée à interrompre la conduction électrique entre les électrodes positives et la borne de sortie de courant positive. La Figure 2B montre que l'amincissement présente une forme circulaire dont le diamètre représente environ 75 % du diamètre du conteneur dans le cas d'un accumulateur cylindrique. L'épaisseur de l'amincissement représente environ 20 % de l'épaisseur de la paroi d'extrémité obturée du conteneur. L'amincissement créé constitue une zone de fragilisation de l'extrémité obturée qui se déchire sous la pression des gaz. L'épaisseur de l'amincissement peut être ajustée en fonction de la pression d'ouverture et la tenue mécanique du conteneur recherchées. Le matériau du conteneur est de préférence en aluminium. L'acier nickelé et le cuivre peuvent aussi être utilisés. En fonction de l'épaisseur de l'amincissement, une pression d'ouverture comprise entre 4 à 20 bar est obtenue. De préférence, on choisira une épaisseur de l'amincissement telle que la pression d'ouverture soit comprise entre 8 à 12 bar. Le dispositif de sécurité est donc applicable à une pression faible et à une large plage de pressions. La partie non déformée de la paroi de l'extrémité obturée forme un retour 15 empêchant l'éjection du faisceau électrochimique en cas de déchirure de l'amincissement.

Un procédé d'utilisation d'un accumulateur selon l'invention est maintenant décrit. Cette description se réfère à un accumulateur cylindrique.

On réalise un amincissement 13 d'une portion de la paroi de l'extrémité obturée 3 du conteneur par emboutissage du matériau du conteneur au moyen d'une presse.

Un joint 14 est inséré dans le fond du conteneur. Il recouvre l'amincissement et le retour de l'extrémité obturée. Il est constitué d'un matériau résistant à la chaleur tel que le polyetherimide (PEI).

Le faisceau électrochimique est ensuite fabriqué. L'électrode positive est constituée d'un collecteur de courant, qui peut être un feuillard en aluminium, recouvert de matière active constituée d'un oxyde lithié de métaux de transition tel que LiCoO₂, LiNiO₂, LiMnO₂, LiMn₂O₄, ou un mélange de ceux-ci.

L'électrode négative est constituée d'un collecteur de courant, qui peut être un feuillard en cuivre, recouvert de matière active constituée d'un matériau capable d'insérer réversiblement du lithium tel que le graphite, le coke, le carbone vitreux et le noir de carbone.

Le séparateur peut être en polyoléfine. On superpose au moins une électrode positive, au moins un séparateur et au moins une électrode négative pour former le faisceau électrochimique 9. On enroule le faisceau électrochimique autour de l'axe creux 10 en aluminium. On soude les électrodes positives et négatives à leur connexion plane. Une connexion de forme plane est préférable, mais tout autre type de connexion est peut-être envisageable.

On introduit le faisceau électrochimique 9 muni des ses connexions dans le conteneur 2. L'imprégnation des électrodes et des séparateurs ainsi que le remplissage du conteneur par l'électrolyte est effectué sous dépression d'air dans le conteneur. L'électrolyte est constitué d'un sel de lithium dissous dans un solvant organique. On ferme le conteneur de façon étanche en soudant sur l'extrémité ouverte 4 du conteneur, un couvercle 5 muni de bornes 6 et 7 de sortie de courant.

Le fonctionnement du dispositif de sécurité est maintenant décrit.

L'amincissement 13 créé dans l'extrémité obturée 3 de l'accumulateur constitue une zone de fragilisation. Lorsque la rigidité de la paroi de l'extrémité obturée est insuffisante pour résister à la pression des vapeurs d'électrolyte, l'amincissement se déchire. La surpression s'évacue par la déchirure et la pression à l'intérieur de l'accumulateur redescend à la pression atmosphérique. Simultanément à l'apparition de la déchirure, la conduction électrique entre la connexion plane de l'électrode positive 11 et la paroi du conteneur 2 est coupée, interrompant l'alimentation des consommateurs électriques. Lorsque la déchirure de l'amincissement est partielle, la surpression est évacuée mais la fonction de coupe-circuit n'est pas assurée. La coupure du courant dans le circuit électrique doit être réalisée par un opérateur.

Le dispositif de sécurité est de conception simple et combine les fonctions de soupape et de coupe-circuit. Il ne nécessite pas de pièce supplémentaire intervenant dans le montage de l'accumulateur ce qui confère au dispositif de sécurité une grande fiabilité.

Le dispositif de sécurité selon l'invention présente également l'avantage de ne pas réduire la densité de courant circulant dans le circuit électrique comme cela est le cas pour l'utilisation de coupe-circuits montés en série. En effet, l'épaisseur de l'amincissement choisie est un compromis entre la section la plus grande possible pour assurer le passage du courant et la section la plus petite possible pour permettre une déchirure de l'amincissement.

Le dispositif de sécurité est donc bien adapté aux applications de haute puissance (véhicules hybrides par exemple), dans lesquelles de fortes densités de courants sont mises en oeuvre.

Un autre avantage de l'invention réside dans le fait que le faisceau électrochimique est retenu dans le conteneur en cas de déchirure brutale de l'amincissement car le retour 15 de l'extrémité obturée empêche l'éjection du faisceau électrochimique. L'ouverture créée par la déchirure de l'amincissement est trop étroite pour laisser passer le faisceau électrochimique. Les risques de projections de produits chimiques dangereux sont ainsi limités.

Le présent mode de réalisation et les figures doivent être considérées comme ayant été présentés à titre illustratif et non restrictif, et l'invention n'est pas censée être limitée aux détails fournis ici mais peut être modifiée en restant dans le cadre de la portée des revendications annexées. En particulier l'extrémité du conteneur obturée par une paroi amincie peut être l'extrémité supportant les bornes de sortie de courant.

## Revendications

1. Procédé d'utilisation d'un dispositif de sécurité pour accumulateur étanche 1 comprenant une alternance d'électrodes positives et négatives respectivement reliées à des bornes de sortie de courant 6 et 7, les électrodes étant disposées dans un conteneur 2 présentant une extrémité obturée 3 par une paroi présentant un amincissement 13 adapté à être déchiré par une surpression à l'intérieur du conteneur, une déchirure totale de l'amincissement interrompant la conduction électrique entre les électrodes d'une polarité et sa borne de sortie de courant, ledit procédé comprenant l'évacuation de la surpression à l'intérieur du conteneur simultanément à l'interruption de la conduction électrique entre les électrodes d'une polarité et sa borne de sortie de courant.

2. Procédé d'utilisation selon la revendication 1, dans lequel l'amincissement constitue une zone de fragilisation de la paroi de l'extrémité obturée.

3. Procédé d'utilisation selon l'une quelconque des revendications 1 à 2, dans lequel l'extrémité obturée par une paroi supporte les bornes de sortie de courant.

4. Procédé d'utilisation selon l'une quelconque des revendications 1 à 2, dans lequel un couvercle placé sur une extrémité ouverte du conteneur supporte les bornes de sortie de courant.

5. Procédé d'utilisation selon l'une quelconque des revendications 1 à 4, dans lequel la déchirure totale interrompt la conduction électrique entre les électrodes positives et la borne de sortie de courant positive.

6. Procédé d'utilisation selon l'une quelconque des revendications 1 à 4, dans lequel la déchirure totale interrompt la conduction électrique entre les électrodes négatives et la borne de sortie de courant négative.

7. Procédé d'utilisation selon l'une quelconque des revendications 1 à 6, dans lequel l'accumulateur étanche est de format cylindrique.

8. Procédé d'utilisation selon l'une quelconque des revendications 1 à 6, dans lequel l'accumulateur étanche est de format prismatique.

9. Procédé d'utilisation selon l'une quelconque des revendications 1 à 8, dans lequel l'accumulateur fonctionne avec des pressions à l'intérieur du conteneur comprises entre 4 et 20 bar.

10. Procédé d'utilisation selon la revendication 9, **caractérisé en ce que** les pressions à l'intérieur du conteneur sont comprises entre 8 et 12 bar.

11. Procédé d'utilisation selon l'une quelconque des revendications 1 à 10, dans lequel l'épaisseur de l'amincissement représente sensiblement 20 % de l'épaisseur de la paroi de l'extrémité obturée du conteneur.

12. Procédé d'utilisation selon l'une quelconque des revendications 1 à 11, dans lequel le dispositif comprend un retour sur la paroi de l'extrémité obturée, ledit retour étant adapté à empêcher l'éjection des électrodes en cas de déchirure de l'amincissement.

## Patentansprüche

1. Verfahren zum Verwenden einer Sicherheitsvorrichtung für einen gasdichten Akkumulator (1), der abwechselnd positive und negative Elektroden umfasst, die jeweils mit Stromausgangsklemmen (6, 7) verbunden sind, wobei die Elektroden in einem Behälter (2) angeordnet sind, der ein Ende (3) aufweist, das durch eine Wand verschlossen ist, die eine Verdünnung (13) aufweist, die dazu geeignet ist, um durch einen Überdruck im Innern des Behälters zerrissen zu werden, wobei ein vollständiges Zerreißen der Verdünnung die Stromleitung zwischen den Elektroden einer Polarität und seiner Stromausgangsklemme unterbricht, wobei das Verfahren das Ablassen des Überdrucks zum Innern des Behälters gleichzeitig mit der Unterbrechung der Stromleitung zwischen den Elektroden einer Polarität und seiner Stromausgangsklemme umfasst.

2. Verwendungsverfahren nach Anspruch 1, wobei die Verdünnung eine Bruchzone der Wand des verschlossenen Endes bildet.

3. Verwendungsverfahren nach einem der Ansprüche 1 bis 2, wobei das durch eine Wand verschlossene Ende die Stromausgangsklemmen trägt.

4. Verwendungsverfahren nach einem der Ansprüche 1 bis 2, wobei ein Deckel, der auf einem offenen Ende des Behälters angeordnet ist, die Stromausgangsklemmen trägt.

5. Verwendungsverfahren nach einem der Ansprüche 1 bis 4, wobei das vollständige Zerreißen die Stromleitung zwischen den positiven Elektroden und der positiven Stromausgangsklemme unterbricht.

6. Verwendungsverfahren nach einem der Ansprüche 1 bis 4, wobei das vollständige Zerreißen die Stromleitung zwischen den negativen Elektroden und der negativen Stromausgangsklemme unterbricht.

7. Verwendungsverfahren nach einem der Ansprüche 1 bis 6, wobei der gasdichte Akkumulator zylindrisch ausgestaltet ist.

8. Verwendungsverfahren nach einem der Ansprüche 1 bis 6, wobei der gasdichte Akkumulator prismatisch ausgestaltet ist.

9. Verwendungsverfahren nach einem der Ansprüche 1 bis 8, wobei der Akkumulator auf Drücken im Innern des Behälters funktioniert, die zwischen 4 und 20 bar liegen.

10. Verwendungsverfahren nach Anspruch 9, **dadurch gekennzeichnet, dass** die Drücke im Innern des Behälters zwischen 8 und 12 bar liegen.

11. Verwendungsverfahren nach einem der Ansprüche 1 bis 10, wobei die Dicke der Verdünnung im Wesentlichen 20 % der Dicke der Wand des verschlossenen Endes des Behälters beträgt.

12. Verwendungsverfahren nach einem der Ansprüche 1 bis 11, wobei die Vorrichtung einen Rückzug auf der Wand des verschlossenen Endes umfasst, wobei der Rückzug dazu geeignet ist, um das Ausstoßen der Elektroden beim Zerreißen der Verdünnung zu verhindern.

## Claims

1. A method of using a safety device for a sealed cell (1) comprising alternating positive and negative electrodes respectively connected to positive and negative current output terminals (6, 7), the electrodes being disposed in a container (2) presenting an end (3) that is closed by a wall presenting thinning (13) adapted to be torn by excess pressure inside the container, complete tearing of the thinning interrupting electrical conduction between the electrodes of one polarity and the corresponding current output terminal, said method comprising evacuating excess pressure inside the container simultaneously with interruption of the electrical conduction between the electrodes of a polarity and its current output terminal.

2. The method of using according to claim 1, in which the thinning constitutes a zone of weakness in the wall at the closed end.

3. The method of using according to claim 1 or claim 2, in which the end closed by a wall supports the current output terminals.

4. The method of using according to claim 1 or claim 2, in which a cover placed on an open end of the container supports the current output terminals.

5. The method of using according to any one of claims 1 to 4, in which complete tearing interrupts electrical conduction between the positive electrodes and the positive current output terminal.

6. The method of using according to any one of claims 1 to 4, in which complete tearing interrupts electrical conduction between the negative electrodes and the negative current output terminal.

7. The method of using according to any one of claims 1 to 6, in which the sealed cell has a cylindrical format.

8. The method of using according to any one of claims 1 to 6, in which the sealed cell has a prismatic format.

9. The method of using according to any one of claims 1 to 8, in which the cell operates with pressures inside the container lying in the range 4 bars to 20 bars.

10. The method of using according to claim 9, **characterized in that** the pressures inside the container lie in the range 8 bars to 12 bars.

11. The method of using according to any one of claims 1 to 10, in which the thickness of the thinning represents substantially 20% of the thickness of the wall at the closed end of the container.

12. The method of using according to any one of claims 1 to 11 in which the safety device includes a rim of the closed end wall, said rim being adapted to prevent the electrodes being ejected in the event of the thinning being torn.
